# DEMANDE DE BREVET EUROPEEN

(11) **EP 4 559 558 A1**
(43) Date de publication de la demande: **28.05.2025**
(21) Numéro de dépôt: 24214399.8
(22) Date de dépôt: 21.11.2024
(51) Int. Cl.: B01D 53/04, B01D 53/047, B01D 53/00, C25B 5/00, F25J 3/02, C21B 5/06, C01B 3/56, F25J 5/00, C21B 7/00

(54) **PROCÉDÉ DE SÉPARATION DU GAZ RÉSIDUAIRE D'UNE UNITÉ DE PRODUCTION DE MÉTAL FERREUX**

(30) Priorité: 24.11.2023 FR 2313009
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: MARTY, Pascal, 75007 PARIS (FR); RODRIGUES, Guillaume, 75007 PARIS (FR); MADELAINE, Laurette, 75007 PARIS (FR)
(74) Mandataire: Air Liquide

(57) **Abrégé**

Un procédé de séparation du gaz résiduaire d'une unité de production de métal ferreux utilise une première unité d'adsorption (4) pour séparer le gaz résiduaire par adsorption à bascule de pression pour produire un gaz (5) appauvri en monoxyde de carbone et en hydrogène et enrichi en CO2 par rapport au gaz résiduaire et un premier gaz (7) enrichi en monoxyde de carbone et en hydrogène et appauvri en CO2 par rapport au gaz résiduaire, une unité (CC) de séparation par condensation partielle et/ou distillation, des moyens pour envoyer le gaz enrichi en CO2 à l'unité (CC) de séparation par condensation partielle et/ou distillation pour produire un fluide (14) riche en CO2, une deuxième unité d'adsorption (6), des moyens pour envoyer au moins une partie du gaz enrichi en CO se séparer par adsorption à bascule de température dans la deuxième unité d'adsorption (6) pour former un gaz (23) enrichi en CO2 par rapport au premier gaz enrichi en CO à une première pression et un deuxième gaz (15) enrichi en CO et en hydrogène par rapport au premier gaz enrichi en CO, le deuxième gaz contenant de l'azote, une unité de séparation (CB) par condensation partielle et/ou lavage et/ou distillation, des moyens pour envoyer au moins une partie du deuxième gaz (15) enrichi en CO et en hydrogène à l'unité de séparation (CB) pour y être séparée pour produire un gaz (17) appauvri en azote et enrichi en CO par rapport au deuxième gaz.

## Description

La présente invention est relative à un procédé de séparation du gaz résiduaire d'une unité de production de métal ferreux.

Un procédé de fabrication de fonte dans un réacteur de fusion tel qu'un haut-fourneau est un procédé dans lequel on introduit dans celui-ci au moins du minerai de fer, un comburant et un combustible de manière à fondre le minerai et obtenir de la fonte comportant au plus 5 % de carbone, dans lequel on récupère à la sortie du réacteur des gaz (dits « de haut-fourneau ») comportant, à base sèche, de 15 à 45 % mol de CO2, de 15 à 45 % mol de CO, le complément étant constitué essentiellement d'azote, d'hydrogène, de divers hydrocarbures et d'un faible pourcentage d'argon, puis on sépare le CO2 du reste du gaz de haut- fourneau, ce dernier étant envoyé vers des moyens d'utilisation dudit gaz.

De préférence les gaz de haut fourneau comportent de 15 à 30 % mol de CO et/ou de CO2 chacun à base sèche. Le haut fourneau est un outil sidérurgique qui produit de la fonte à partir d'une charge de minerai de fer et de coke, l'oxydant de la combustion étant de l'air éventuellement enrichi en oxygène. Le minerai de fer est chauffé, réduit et fondu grâce au coke dont la combustion avec l'air apporte une part de l'énergie nécessaire au chauffage et à la fusion du minerai de fer. On peut bien entendu utiliser, outre le coke, du charbon ou un autre hydrocarbure injecte au niveau des tuyères du haut-fourneau.

D'autre part, du monoxyde de carbone est produit, résultant de la réaction de combustion du coke et/ou du charbon et/ou de l'hydrocarbure avec l'air appelé le vent (« blast » en anglais) qui est injecté dans lesdites tuyères, enrichi ou non en oxygène. Ce monoxyde de carbone est nécessaire à la réduction du minerai de fer. La production annuelle de fonte dans un haut-fourneau peut atteindre une centaine de milliers de tonnes pour les plus petits d'entre eux et plusieurs millions de tonnes pour les plus productifs. Dans une même usine, on peut avoir un ou plusieurs hauts fourneaux, éventuellement jusqu'à une dizaine sur certains sites.

Du fait de la combustion et des réactions engendrées dans le haut fourneau, on récupère a la sortie de celui-ci un gaz dit de haut-fourneau qui est un mélange typiquement d'azote (entre 35 et 65 percent environ en volume) qui vient essentiellement de l'air injecte aux tuyères du haut-fourneau, de monoxyde de carbone (entre environ 15 et 30 % mol) et de dioxyde de carbone (entre environ 15 et 30 % mol également) provenant de la combustion partielle ou totale du coke ou d'une manière générale du combustible injecte. On retrouve également du fait de cette combustion de la vapeur d'eau puisque la réaction générale entre un produit carbone et l'oxygène au cours de la combustion produit essentiellement du CO2 et de l'H2O.

On retrouve également dans le gaz de haut- fourneau d'autres gaz en quantité globale inferieure, généralement inferieure au global a 12 percent en volume, ces autres gaz étant constitués notamment d'hydrogène, de divers hydrocarbures, d'argon provenant de l'air, etc..

Ce gaz de haut-fourneau est un gaz dit « pauvre » car à faible pouvoir calorifique, typiquement compris entre 2 000 et 6 000 kJ/Nm3, par opposition avec d'autres gaz sidérurgiques dits « riches » car ayant un pouvoir calorifique beaucoupplus élevé (par exemple les gaz issus d'un convertisseur de fonte en acier ou d'un four à coke, ayant des pouvoirs calorifiques typiquement compris entre 6 000 et 10 000 kJ/Nm3 et entre 12 000 et 20 000 kJ/Nm3, respectivement).

D'une manière générale, la quantité de gaz produite par un haut-fourneau est très importante et de l'ordre d'environ 1 500 Nm3 de gaz pour une tonne de fonte produite. Il en résulte que, compte tenu de la composition dudit gaz, la quantité de dioxyde de carbone produite par tonne de fonte est également très importante: par exemple pour un gaz de haut-fourneau ayant une teneur moyenne en dioxyde de carbone de 22 percent dans le gaz sec et pour un haut- fourneau produisant un million de tonnes de fonte par an, la quantité de dioxyde de carbone émise dans les gaz de haut-fourneau est de 330 millions de Nm3 par an, soit environ 650 000 tonnes de dioxyde de carbone produite pendant un an.

Pour un haut fourneau qui produirait 3 millions de tonnes de fonte par an, la quantité de CO2 émise est d'environ 2 millions de tonnes par an tandis que pour un site produisant 7 millions de tonnes de fonte par an, la quantité de CO2 est d'environ 4,5 millions de tonnes.

Ces quantités sont tout-à-fait considérables et compte tenu de l'effet négatif de ces gaz vis-à-vis de l'atmosphère et de l'environnement, il ne peut être envisagé de les envoyer ainsi directement dans l'atmosphère. En outre, rejeter lesdits gaz dans l'atmosphère consisterait à envoyer également dans celle-ci du monoxyde de carbone dont on sait qu'il est très dangereux et il est donc nécessaire de prévoir des systèmes de récupération de ce gaz de haut-fourneau.

La composition typique d'un exemple d'un gaz résiduaire d'une unité de production de métal ferreux, ici un gaz de haut fourneau ou « gaz de gueulard », est la suivante:
- H2: 4-5 mole %
- CO: 24-25 %
- CO2: 23-25 %
- N2: 40-45 %
- H2O: 3 %

Les extractions du CO2 et de l'N2 présents dans les gaz de gueulard des hauts fourneaux ont pour but de les valoriser:
- comme combustible (pouvoir calorifique plus élevé) vers des turbines (génération d'électricité pour une aciérie intégrée) ou vers d'autres utilisateurs de l'aciérie (tels que les cowpers en mélange avec d'autres gaz combustibles (gaz de cokerie ou gaz naturel) pour préchauffer l'air enrichi)
- comme gaz réducteur du charbon dans le haut fourneau lui-même

Il est également connu de EP3997235A1 d'utiliser un gaz de haut fourneau contenant plus que 20% mol CO comme matière première pour la production de biocarburants pour transformer le CO en au moins un bio-carburant, par exemple le bio-éthanol. Des bioréacteurs opérant par exemple selon WO08115080, dans lesquels le CO est transformé en bio-éthanol, peuvent être utilisés.

FR29528331, FR2859483 et FR2968575 décrivent des procédés qui séparent un gaz enrichi en CO et appauvri en CO2 dans PSA mais ensuite l'envoient soit vers le haut fourneau soit le retournent vers le VPSA (cas de FR2859483).

Le procédé de FR2859483 produit même du CO par séparation cryogénique mais à partir du gaz enrichi en CO2 du PSA (Figure 3).

US2022233994 concerne le traitement de gaz de synthèse pour enlever le CO2 qu'il comprend, cette séparation étant réalisée principalement par lavage au méthanol (AGR). Il est à noter que la séparation d'un gaz de synthèse pour en récupérer le monoxyde de carbone qu'il contient est une technologie relativement ancienne.

On pourrait par exemple citer GB1025104 de 1966, US3361534 de 1968 ou US3872025 de 1975.

Il est un objet de la présente invention de produire un débit riche en CO à partir d'une unité de production de métal ferreux, en même temps qu'en capturant du CO2 produit par l'unité de production.

Selon un objet de l'invention, il est prévu un procédé de séparation du gaz résiduaire d'une unité de production de métal ferreux dans lequel :
i) Le gaz résiduaire contient au moins du CO, du CO2, de l'hydrogène et de l'azote et est comprimé dans un premier compresseur et ensuite séparé par adsorption à bascule de pression dans une première unité d'adsorption pour produire un gaz appauvri en monoxyde de carbone et en hydrogène et enrichi en CO2 par rapport au gaz résiduaire et un premier gaz enrichi en monoxyde de carbone et en hydrogène et appauvri en CO2 par rapport au gaz résiduaire, contenant au plus 2% mol CO2
ii) Le gaz enrichi en CO2 est envoyé à une unité de séparation par condensation partielle et/ou distillation et/ou solidification qui produit un fluide riche en CO2 contenant au moins 80% mol de CO2, voire au moins 95% mol de CO2
iii) Au moins une partie du gaz enrichi en CO est séparée par adsorption à bascule de température dans une deuxième unité d'adsorption pour former un gaz enrichi en CO2 par rapport au premier gaz enrichi en CO à une première pression et un deuxième gaz enrichi en CO et en hydrogène par rapport au premier gaz enrichi en CO, le deuxième gaz contenant de l'azote et
iv) au moins une partie du deuxième gaz enrichi en CO et en hydrogène est comprimée et séparée par condensation partielle et/ou lavage et/ou distillation pour produire un troisième fluide enrichi en azote et appauvri en hydrogène et en CO par rapport au deuxième gaz et un quatrième gaz appauvri en azote et enrichi en CO et/ou en hydrogène par rapport au deuxième gaz.

Selon d'autres aspects facultatifs :
- au moins une partie du deuxième et/ou du quatrième gaz enrichi en CO est envoyée à un procédé de production de biocarburant, par exemple d'éthanol, par fermentation.
- au moins une partie du deuxième et/ou quatrième gaz enrichi en CO et en hydrogène est comprimée et séparée par condensation partielle et/ou lavage et/ou distillation pour produire un troisième fluide enrichi en azote et appauvri en hydrogène et en CO par rapport au deuxième gaz et un quatrième gaz appauvri en azote et enrichi en CO et/ou en hydrogène par rapport au deuxième gaz.
- l'au moins une partie du deuxième gaz est séparée par condensation partielle et/ou lavage et/ou distillation pour produire le quatrième gaz enrichi en CO et appauvri en hydrogène et en azote par rapport au deuxième gaz et un cinquième gaz appauvri en azote et en CO et enrichi en hydrogène par rapport au deuxième gaz.
- au moins une partie du quatrième gaz et/ou du cinquième gaz est envoyée à un procédé de production de biocarburant, par exemple d'éthanol, par fermentation.
- au moins une partie du troisième fluide est envoyée au procédé de production de biocarburant, par exemple d'éthanol, par fermentation.
- le gaz enrichi en CO2 produit par adsorption à bascule de température est mélangé avec le gaz enrichi en CO2, éventuellement en amont d'une étape de compression du gaz enrichi en CO2.
- le gaz résiduaire contient entre 15 et 45% mol CO, de préférence plus que 20% mol de CO.
- le premier gaz enrichi en CO est enrichi en azote par rapport au gaz résiduaire.
- le deuxième gaz enrichi en CO contient au moins 60% mol de CO.
- au moins une partie du gaz contenant au moins 60% mol CO est séparé à température cryogénique par condensation partielle et/ou lavage et/ou distillation pour réduire sa teneur en azote formant un gaz contenant au moins 80% mol CO ainsi que de l'hydrogène et un gaz enrichi en azote.
- le gaz résiduaire contient de l'argon et la séparation à température cryogénique produit un fluide enrichi en argon.
- la séparation à température cryogénique produit un fluide enrichi en hydrogène.
- le gaz appauvri en CO2 et enrichi en CO contient au moins 85%, de préférence au moins 90%du CO présent dans le mélange gazeux envoyé à la première unité d'adsorption.
- le gaz appauvri en CO2 et enrichi en CO contient au plus 83%, de préférence au plus 80% du CO présent dans le mélange gazeux envoyé à la première unité d'adsorption.
- un gaz de régénération envoyé à la deuxième unité d'adsorption est constitué par une partie du gaz contenant au moins 60% mol CO.
- un gaz de régénération envoyé à la deuxième unité d'adsorption est constitué par un gaz produit par la séparation à température cryogénique.
- le gaz enrichi en CO2 est séparé dans une unité de séparation par condensation partielle et/ou distillation et/ou solidification formant au moins un gaz plus riche en CO et hydrogène que le gaz enrichi en CO2 et cet au moins un gaz plus riche en CO et en hydrogène est envoyé être séparé dans la première unité d'adsorption.
- le gaz enrichi en CO2 contient de l'eau et séché dans une unité de séchage en amont de l'unité de séparation par condensation partielle et/ou distillation et/ou solidification, un gaz de régénération contenant du CO et/ou de l'hydrogène est utilisé pour régénérer l'unité de séchage et ensuite est envoyé être séparé dans la première unité d'adsorption.
- une partie du deuxième gaz est séparée à température cryogénique par condensation partielle et/ou lavage et/ou distillation pour réduire sa teneur en azote formant un gaz contenant au moins 80% mol CO ainsi que de l'hydrogène et un gaz enrichi en azote.
- le gaz résiduaire contient de l'argon et la séparation par condensation partielle et/ou lavage et/ou distillation produit un fluide enrichi en argon.
- la séparation à température cryogénique produit un fluide contenant au moins 80% d'hydrogène.
- au moins une partie du gaz enrichi en CO2 par rapport au premier gaz enrichi en CO et produit par la deuxième unité d'adsorption est envoyée en amont de la première unité d'adsorption pour y être séparé.
- au moins une partie du gaz enrichi en CO2 par rapport au premier gaz enrichi en CO et produit par la deuxième unité d'adsorption est envoyée en amont de l'unité de séparation par condensation partielle et/ou distillation et/ou solidification pour y être séparé.
- au moins une partie du gaz enrichi en CO2 par rapport au premier gaz enrichi en CO et produit par la deuxième unité d'adsorption est envoyée dans l'unité de production de métal ferreux, par exemple un haut fourneau.

De manière surprenante, la meilleure optimisation du procédé est celle dans lequel une unité d'adsorption par bascule de pression épure un gaz de l'unité de production de métal contenant au moins 20% de monoxyde de carbone et opère dans le but de maximiser le rendement en CO2 du gaz enrichi en CO2 produit par cette adsorption.

L'invention sera décrite de manière plus détaillée en se référant aux figures où :
[FIG.1] représente un procédé comparatif.

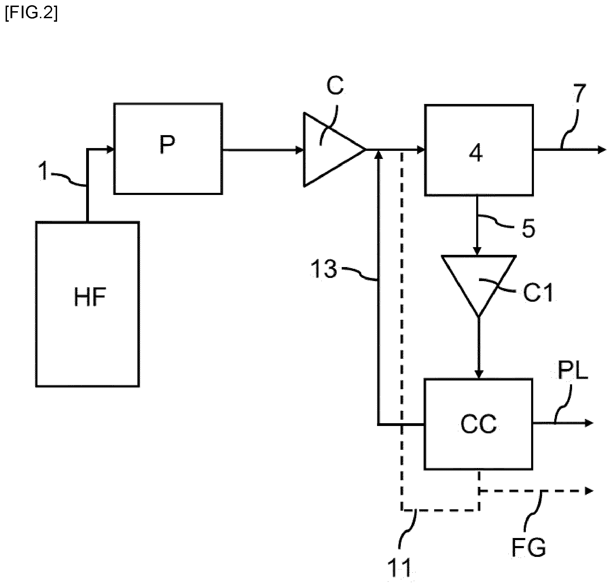

[FIG.2] représente un procédé comparatif.
[FIG.3] représente un procédé selon l'invention.

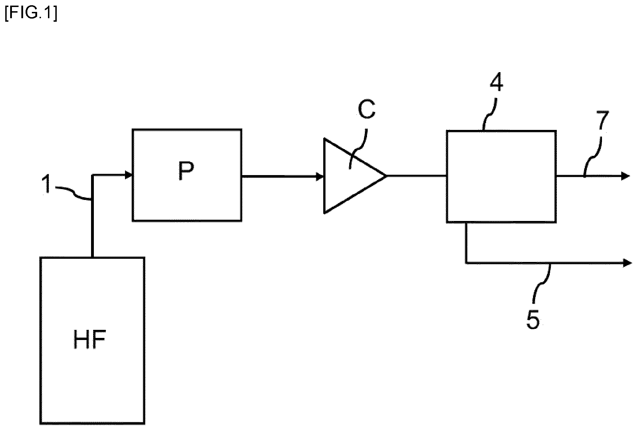

[FIG.1] illustre un procédé de séparation d'un gaz de gueulard produit par un haut fourneau HF qui est épuré dans une unité de prétraitement P pour enlever les poussières qu'il contient, comprimé par un compresseur C1 et séparé par adsorption à bascule de pression dans une unité de séparation 4 pour produire un gaz enrichi en CO et en azote et appauvri en CO2 7 par rapport au gaz à séparer 1 et un gaz appauvri en CO et en azote et enrichi en CO2 5 par rapport au gaz à séparer.

Dans le cas d'une unité de séparation 4 par adsorption à bascule de pression, connu sous l'acronyme PSA, traitant un gaz résiduaire d'une unité de métal ferreux comprimé à environ 8 bars et opéré en mode "rendement CO élevé", le rendement de récupération du CO à haute pression dans le gaz 7 est typiquement supérieur à 80% (voire supérieur à 85%) pour des rendements correspondants d'extraction de CO2 à basse pression dans le gaz 5 aux alentours de 88% et d'N2 de 15%.

On cherche à la fois à maximiser le rendement de récupération du CO et les rendements d'extraction du CO2/N2.

Le flux riche en CO 7 généré par le PSA 4 contient donc également beaucoup d'azote (environ 85% mol du débit de gaz traité) car la sélectivité CO/N2 est très faible sur des adsorbants classiques. Il contient également de l'hydrogène et du CO2 (environ 12% du débit de gaz traité)

Le gaz riche en CO2 produit à basse pression par le PSA contient également le CO non adsorbé (environ 15% du débit de gaz de gueulard traité), de l'H2, de l'azote et l'eau présente dans le gaz de gueulard.

**[TAB1] représente un exemple de bilan de matière obtenu pour un PSA 4 fonctionnant en mode "rendement CO élevé" sur gaz résiduaire 1à environ 8 bars comme illustré à la [FIG. 1] :**

| | Entrée PSA 4 | Gaz enrichi en CO 7 | Gaz enrichi en CO2 5 |
|---|---|---|---|
| Débit | 100 | 67 | 33 |
| H2 mole % | 5 | 8 | 1 |
| CO | 25 | 32 | 11 |
| CO2 | 26 | 5 | 68 |
| N2 | 43 | 55 | 18 |
| H2O | 1 | 0 | 2 |

| | | | |
|---|---|---|---|
| Rendement récupération CO = 85.8 % | | | |

Il est connu de EP1869385 de séparer le gaz enrichi en CO2 produit à basse pression par séparation par adsorption d'un gaz de gueulard d'une unité de métal ferreux, par exemple par condensation partielle et/ou distillation. Ces deux technologies peuvent être intégrées en recyclant tout ou partie du flux de gaz appauvri en CO2 et contenant du CO provenant de la séparation par condensation partielle et/ou distillation dans une unité de séparation CC en amont ou en aval du compresseur du gaz C alimentant le PSA 4, permettant l'économie de 10% ou plus de l'énergie de compression du PSA 4. [TAB.2] montre l'exemple d'un bilan de matière obtenu pour un PSA 4 fonctionnant en mode "Rendement CO élevé" sur le gaz résiduaire 1 d'un haut fourneau HF à environ 8 bars combiné à une unité de séparation par condensation partielle et/ou distillation et/ou solidification CC :

**[TAB.2]**

| | Entrée PSA 4 | Gaz enrichi en CO 7 | Gaz enrichi en CO2 5 |
|---|---|---|---|
| Débit | 100 | 80 | 20 |
| H2 mole % | 5 | 7 | 0 |
| CO | 25 | 31 | 0.5 |
| CO2 | 26 | 7 | 99 |
| N2 | 43 | 55 | 0.5 |
| H2O | 1 | 0 | 0 |

Le rendement de récupération de CO est dans ce cas proche de 100%. Le recyclage des gaz 11 et/ou 13 vers le PSA aide à se reprocher du 100%.

Il est possible d'opérer le PSA sur le gaz de gueulard 1 en mode "Rendement élevé CO2" avec un rendement dégradé de récupération de CO, ce qui permet d'augmenter le rendement d'extraction du CO2. Ce fonctionnement peut être obtenu en modifiant le cycle du PSA et/ou en jouant sur la qualité des adsorbants et/ou en laissant moins percer le CO2 dans le gaz riche en CO.

Exemple de rendements qui peuvent être obtenus par un PSA 4 sur gaz de gueulard à 8 bars :

**[TAB.3]**

| PSA 4 | | | |
|---|---|---|---|
| MODE | | Rendement élevé CO dans gaz 7 | Production CO2 élevée dans gaz 5 |
| Rendement CO dans gaz 7 | % | 85 | 80 |
| Rendement N2 dans gaz 7 | % | 86 | 82 |
| Rendement CO2 dans gaz 7 | % | 13 | 2 |
| Rendement H2 dans gaz 7 | % | 94 | 93 |

En opération en mode « Rendement CO élevé », on opère le PSA 4 pour maximiser le pourcentage de CO récupéré dans le gaz 7 envoyé à l'unité TSA. Ainsi on voit que 85% du CO présent dans le gaz à l'entrée du PSA 4 se trouve ensuite dans le gaz 7, ainsi que 94% de l'hydrogène. Toutefois, un pourcentage non négligeable du CO2 (13%) se trouve dans le gaz 7.

En opération en mode "Production CO2 élevée", il peut en résulter un débit riche en CO HP 7 contenant au plus 2 mole % de CO2. En revanche, on constatera une diminution du débit partiel de CO produit (c'est-à-dire du rendement de récupération du CO).

De manière surprenante, afin d'optimiser le procédé entier pour produire le débit contenant suffisamment peu de CO2 pour permettre à l'unité TSA d'éliminer tout le CO2 restant, il est nécessaire régler le fonctionnement le PSA 4 pour réduire la teneur en CO2 autant que possible dans le gaz enrichi en CO produit 7.

Sur un "gaz de gueulard" de haut-fourneau, si l'on souhaite obtenir à la fois:
- un taux maximum de récupération de CO
- ou/et un taux maximum de récupération d'un flux riche en CO2 purifié et produit sous forme liquide ou gazeuse
- ou/et un flux riche en CO plus ou moins appauvri en N2
   l'invention proposée ci-dessous peut être mise en place. Elle consiste à combiner le PSA fonctionnant de préférence en mode " Production CO2 élevée " avec:
- une unité de séparation de CO2 par condensation partielle et/ou distillation et/ou solidification (et ses recyclages appropriés) pour produire le CO2 purifié sous forme liquide ou gazeuse et
- un TSA CO2 sur le flux riche en CO produit par le PSA pour adsorber le CO2 résiduel (au plus 2 %). Le gaz de régénération nécessaire ne devra pas contenir de CO2 et pourra provenir:
- Du produit du TSA CO2 (voir remarque ci-dessous)
- Du flux N2 ou du flux CO produits par la boîte froide située en aval
- Un flux externe

Le gaz résiduaire ainsi généré pourra (ou pas) être recyclé à l'entrée du PSA et/ou à l'entrée de l'unité de séparation de CO2 par condensation partielle et/ou distillation et/ou solidification ou dans le haut fourneau toujours dans le but d'améliorer les rendements de récupération des molécules H2/CO et CO2.
- Une unité cryogénique (boîte froide avec étapes de condensation partielle et/ou de lavage (par exemple lavage au N2 liquide ou au CO liquide) et/ou de distillation avec ou sans cycle frigorifique associé) en série avec le TSA sur le flux riche en CO pour une séparation partielle ou totale de l'azote présent dans le flux riche en CO. Un troisième gaz résiduel éventuellement créé dans l'unité cryogénique pourra également être recyclé en amont du PSA ou en amont de l'unité de séparation de CO2 par condensation partielle et/ou distillation et/ou solidification.

L'unité cryogénique pourra être précédée d'une étape de compression du gaz riche en CO.

On pourra profiter de l'unité cryogénique pour produire au moins un flux annexe plus ou moins riches en H2 et/ou au moins un flux annexe riche en argon (argon provenant de l'air et de l'O2 introduits dans le haut fourneau et se retrouvant dans le gaz de gueulard).

La teneur relativement importante en CO2 que le TSA devra enlever en amont de la boîte froide N2/CO nécessitera une quantité de chaleur importante. L'utilisation d'une portion du gaz décarboné disponible en aval de ce TSA n'est pas nécessairement souhaitable à double titre. D'une part elle induirait une perte en rendement CO/H2 si ce gaz de régénération est envoyé au réseau de combustible ou une perte en efficacité énergétique si ce gaz est recyclé en amont du PSA, d'autre part la présence de CO/H2 limiterait la température de régénération à 150°C afin de s'affranchir des problèmes de réactivité au niveau du réchauffeur de gaz de régénération du TSA. On préférera alors utiliser le flux d'N2 provenant de la boîte froide CO/N2 pour régénérer le TSA et renvoyer le flux de régénération vers le réseau de carburant.

L'intérêt principal de faire fonctionner le PSA en mode "Extraction élevée de CO2" est de faciliter l'abattement aval complet du CO2, notamment compatible avec une technologie type TSA, et ouvrant la possibilité à une séparation finale N2/CO. Le CO perdu dans le gaz résiduaire du PSA sera récupéré par l'unité de séparation par condensation partielle et/ou distillation et/ou solidification et recyclé à l'entrée du PSA pour améliorer le rendement de production.

L'inconvénient majeur de cette solution est un grossissement du débit de gaz recyclé et par conséquent des équipements ainsi qu'une hausse de l'énergie spécifique de l'unité de séparation par condensation partielle et/ou distillation et/ou solidification en raison de l'appauvrissement en CO2 du gaz résiduaire du PSA.

On pourra ainsi globalement produire du CO2 pur et un flux très riche en CO avec des rendements de récupération élevés. La quantité d'azote résiduel dans le flux riche en CO (c'est à dire le rendement d'extraction de l'azote) peut être adaptée dans la boîte froide. Le CO purifié ainsi produit pourra être dirigé soit vers des unités de production de biocarburants soit recyclé dans le haut fourneau (réduction du CO2 émis par le haut fourneau).

Le PSA peut être soit dimensionné sur un mode "Rendement maximal CO" (choix de l'adsorbant et cycle optimum), soit dimensionné sur un mode " Extraction élevée de CO2" (avec le choix de l'adsorbant et/ou cycle optimaux), soit dimensionné de façon à pouvoir être opéré selon les deux modes (nécessitant un adsorbent adéquat + modification du cycle en cours d'opération).

Le couplage d'un PSA CO2 avec une séparation par condensation partielle et/ou distillation et/ou solidification, a pour objectifs à la fois:
- D'enrichir le gaz résiduaire du PSA en CO2 afin de minimiser l'énergie spécifique de la séparation par condensation partielle et/ou distillation et/ou solidification
- D'augmenter la pureté en CO du produit qui peut être envoyé à procédé consommateur de monoxyde de carbone, par exemple un procédé de conversion de CO en éthanol. utilisateur du CO

Exemple de bilan matière obtenu pour un PSA4 fonctionnant en mode "Rendement CO2 élevé" sur gaz de gueulard à environ 8 bars combiné à une unité de séparation de CO2 à basse température CC, un TSA 6 et une séparation cryogénique CB de CO et de N2:

**[TAB.3]**

| | Entrée PSA 4 | CO produit 17 | CO2 produit 14 | N2 produit 19 |
|---|---|---|---|---|
| Débit | 100 | 31 | 26 | 43 |
| H2 mole % | 5 | 17.5 | 0 | 0 |
| CO | 25 | 80.5 | 0.5 | 0.5 |
| CO2 | 26 | 0 | 99 | 0 |
| N2 | 43 | 2 | 0.5 | 99.5 |
| H2O | 1 | 0 | 0 | 0 |

| | | | | |
|---|---|---|---|---|
| Rendement CO: proche de 100% | | | | |

La maximisation du rendement en CO du PSA 4 peut être recherchée afin d'obtenir un gaz résiduaire 5 de PSA 4 plus riche en CO2, diminuant ainsi l'énergie spécifique de la séparation par condensation partielle et/ou distillation et/ou solidification CC. L'intérêt principal de faire fonctionner le PSA 4 en mode « rendement CO élevé" est d'augmenter la concentration en CO2 dans le gaz enrichi en CO2 5 du PSA 4, celui-ci étant le débit alimentant l'appareil de séparation par condensation partielle et/ou distillation et/ou solidification CC. Ce schéma présente l'intérêt de diminuer l'OPEX, et dans une moindre mesure le CAPEX de l'appareil de séparation par condensation partielle et/ou distillation et/ou solidification CC.

Un bilan matière typique du système CC sur gaz enrichi en CO2 de PSA traitant un gaz de gueulard de haut fourneau est indiqué ci-dessous:

**[TAB.4]**

| | Gaz enrichi en CO2 5 | Liquide riche en CO2 | Gaseous phase (#11) | Stripper top (#22) | Liquide riche en CO2 14 |
|---|---|---|---|---|---|
| P bara | 1.05 | 65 | 35 | 21 | 21 |
| T °C | 40 | -52 | -52 | -53 | -20 |
| Débit | 100 | 65 | 35 | 6 | 59 |
| H2 mole % | 1 | 0 | 2.9 | 0.2 | 0 |
| CO | 11 | 2.2 | 29.9 | 24.6 | 0 |
| CO2 | 68 | 94.1 | 21.2 | 33.9 | 100 |
| N2 | 18 | 3.7 | 46 | 41.3 | 0 |
| H2O | 2 | 0 | 0 | 0 | 0 |
| Rapport N2/CO | | | 1.53 | 1.7 | |

L'optimisation du compresseur C1 (si présent) du gaz enrichi en CO2 5 et des cycles de froid externes permet d'obtenir des consommations énergétiques spécifiques de l'ordre de 200 kW/ton CO2 liquide produit.

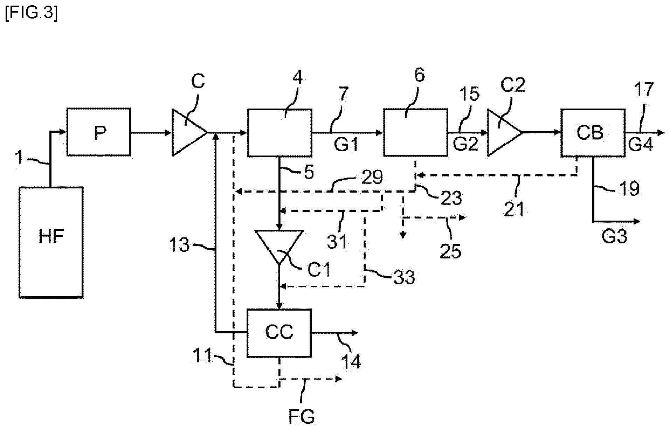

[FIG.3] illustre un procédé selon l'invention. Elle consiste à combiner une unité de séparation par adsorption à bascule de pression PSA 4, une unité de séparation par condensation partielle et/ou distillation et/ou solidification et une unité de séparation par adsorption à bascule de température TSA 6. Un exemple d'une unité de séparation par condensation partielle et/ou distillation est décrite dans FR2310716 déposée le 6 octobre 2023.

Un gaz 1 comportant de 15 à 45 % mol, voire de 15 à 30% mol, de CO2, de 15 à 45 % mol, voire de 15 à 30% mol de CO, le complément étant constitué essentiellement d'azote, d'hydrogène, de divers hydrocarbures, d'eau et d'un faible pourcentage d'argon. Ce gaz est traité dans une unité de prétraitement P pour enlever des impuretés solides et ensuite comprimé dans un compresseur C jusqu'à une pression d'environ 8 bars.

Le gaz comprimé 1 est séparé par adsorption à bascule de pression dans l'unité 4 produisant un gaz enrichi en CO et en hydrogène 7 par rapport au gaz 1 entrant dans l'unité 4, de préférence contenant au plus 2% CO2. L'unité 4 produit également un gaz 5 appauvri en CO et enrichi en CO2 par rapport au gaz 1 entrant dans l'unité 4.

Le gaz 5 peut être comprimé dans un compresseur C1. Le gaz 5 se trouve à une première pression supérieure à la deuxième pression à laquelle se trouve le gaz 7.

Le gaz 5 est séparé dans l'unité CC par condensation partielle et/ou distillation et/ou solidification pour former un fluide (gaz ou liquide) 14 riche en CO2 contenant au moins 80% mol CO2, voire au moins 95% mol CO2. L'unité CC produit également un gaz 13 enrichi en monoxyde de carbone et en l'hydrogène par rapport au gaz 5 qui est envoyé en amont de l'unité PSA 4 ou en amont du compresseur C. Le gaz 13 peut, par exemple est un gaz d'une étape de condensation partielle et/ou un gaz de tête d'une colonne de distillation. L'unité CC produit un gaz 11, enrichi en monoxyde de carbone et en l'hydrogène par rapport au gaz 5, qui est divisé en deux, une partie FG servant de gaz combustible et une autre partie 11 est éventuellement utilisée pour régénérer des sécheurs (non illustrés) en amont de l'unité CC. Le gaz de régénération 11 chargé de l'eau après la régénération est envoyé en amont de l'unité PSA 4 ou en amont du compresseur C. Il est également possible d'utiliser une partie du gaz 15, 17, 21,23,31,33 comme gaz de régénération.

Le gaz 7, G1 est séparé par l'unité d'adsorption 6 pour former un gaz 15 enrichi en CO et en H2 par rapport au gaz 7. Le gaz 15, G2 ne contient plus de CO2 mais contient encore de l'azote.

Selon une variante, seul l'unité 6 sert à séparer le gaz 7 et le gaz 15 constitue le produit du procédé.

Le gaz de régénération nécessaire pour régénérer l'unité 6 ne devra pas contenir de CO2 et pourra provenir:
- Du produit 15, 17, 19 du TSA CO2 6
- Un flux externe

Le gaz résiduaire 23 ainsi généré par l'unité TSA 6 pourra (ou pas) être recyclé à l'entrée du PSA 4 (débit 29) et/ou à l'entrée de l'unité CC (débit 31, 33) ou dans le haut fourneau HF toujours dans le but d'améliorer les rendements de récupération des molécules H2/CO et CO2.

Ce gaz 15 est éventuellement comprimé dans le compresseur C2 et séparé dans une unité cryogénique CB. L'unité CB comprend une enceinte thermiquement isolée contenant au moins un séparateur de phase et/ou au moins une colonne de lavage et/ou au moins une colonne de distillation. L'au moins une colonne de lavage peut être une colonne de lavage à l'azote liquide ou au monoxyde de carbone liquide. L'unité CB peut comprendre au moins un cycle frigorifique. La séparation réalisée par l'unité CB est une séparation partielle ou totale de l'azote présent dans le flux riche en CO 15. L'unité CB produit un fluide 19 enrichi en azote et appauvri en CO et en hydrogène par rapport au gaz 15. Le fluide 19 peut contenir au moins 90% mol d'azote. L'unité CB produit au moins un gaz enrichi en hydrogène et/ou en CO et appauvri en azote par rapport au gaz 15. Elle peut par exemple produire au moins un gaz enrichi en hydrogène et appauvri en azote et en CO par rapport au gaz 15 et/ou au moins un gaz enrichi en CO et appauvri en azote et en hydrogène par rapport au gaz 15.

L'unité de fermentation 13 est alimentée par au moins une partie du gaz 15 et/ou au moins une partie d'au moins un gaz enrichi en hydrogène et/ou en CO et appauvri en azote par rapport au gaz 15 provenant de l'unité CB.

De préférence, elle est alimentée par au moins un gaz enrichi en hydrogène et appauvri en azote et en CO par rapport au gaz 15 et/ou au moins un gaz enrichi en CO et appauvri en azote et en hydrogène par rapport au gaz 15. Le fait d'alimenter l'unité de fermentation par deux gaz de pureté différente permet de varier les teneurs en CO et en H2 dans le gaz présent dans l'unité de fermentation. Il est également possible d'envoyer un débit variable du gaz 19 enrichi en azote pour ralentir la réaction de fermentation.

Une autre possibilité est d'envoyer au moins une partie du gaz enrichi en hydrogène et appauvri en azote et en CO par rapport au gaz 15 et/ou au moins une autre partie du gaz enrichi en CO et appauvri en azote et en hydrogène par rapport au gaz 15 à un autre consommateur du gaz.

Un gaz résiduel 21 éventuellement créé dans l'unité cryogénique pourra également être recyclé en amont du PSA 4 (débit 29) ou en amont de l'unité CC (débit 31, 33).

On pourra profiter de l'unité cryogénique CB pour produire au moins un flux plus ou moins riche en H2, par exemple un fluide (gaz ou liquide) contenant au moins 80% mol d'hydrogène et/ou un fluide (gaz ou liquide) contenant au moins 80% mol d'argon (l'argon provenant de l'air et de l'O2 introduits dans le haut fourneau HF et se retrouvant dans le gaz de gueulard 1).

La teneur relativement importante en CO2 que l'unité TSA 6 devra enlever en amont de l'unité CB nécessitera une quantité de chaleur importante. L'utilisation d'une portion du gaz décarboné 15 disponible en aval de ce TSA 6 comme gaz de régénération n'est pas nécessairement souhaitable à double titre. D'une part elle induirait une perte en rendement CO/H2 si ce gaz de régénération est envoyé au réseau de gaz combustible ou une perte en efficacité énergétique si ce gaz est recyclé en amont du PSA 4, d'autre part la présence de CO/H2 limiterait la température de régénération à 150°C afin de s'affranchir des problématiques de réactivité au niveau du réchauffeur de l'unité TSA 6. On préférera alors utiliser le flux d'N2 19 provenant de la boîte froide CB pour régénérer le TSA 6 et renvoyer le flux de régénération vers le réseau de combustible.

L'intérêt principal de faire fonctionner l'unité PSA 4 en mode "Production CO2 élevée" est de faciliter l'abattement aval complet du CO2, notamment compatible avec une technologie type TSA, et ouvrant la possibilité à une séparation finale N2/CO. Le CO perdu dans le gaz résiduaire 5 du PSA 4 sera récupéré par l'unité CC de séparation par condensation partielle et/ou distillation et/ou solidification et recyclé à l'entrée du PSA pour améliorer le rendement de production.

L'inconvénient majeur de cette solution est un grossissement du débit de gaz recyclé et par conséquent des équipements ainsi qu'une hausse de l'énergie spécifique de l'unité CC en raison de l'appauvrissement en CO2 du gaz résiduaire 5 de l'unité PSA 4.

On pourra ainsi globalement produire du CO2 pur et un flux très riche en CO avec des rendements de récupération élevés. La quantité d'azote résiduel dans le flux riche en CO (c'est à dire le rendement d'extraction de l'azote) peut être adaptée dans la boîte froide. Le CO purifié ainsi produit pourra être dirigé soit vers des unités de production de biocarburant, par exemple d'éthanol (utilisant un procédé Lanzatech par exemple), soit recyclé dans le haut fourneau (réduction du CO2 émis par le haut fourneau).

Le PSA 4 peut être soit dimensionné sur un mode "Rendement CO élevé" (choix de l'adsorbant et cycle optimum), soit dimensionné sur un mode " Production CO2 élevée " (choix de l'adsorbant et cycle optimum), soit dimensionné de façon à pouvoir être opéré selon les deux modes (adsorbent adéquat + modification du cycle en cours d'opération).

Le gaz de régénération nécessaire pour régénérer l'unité 6 ne devra pas contenir de CO2 et pourra provenir:
- Du produit du TSA CO2 6
- De l'azote 19, G3 ou du CO 17, G4 produits par l'unité CB située en aval
- Un flux externe

Comme un procédé de fermentation produisant un biocarburant, par exemple de l'éthanol, a des besoins variables en terme de gaz d'alimentation, il est possible d'y envoyer un mélange d'au moins deux gaz produit par le procédé selon l'invention, par exemple une partie d'au moins deux des gaz 15,17, 19, 21 et un gaz enrichi en hydrogène produit par l'unité CB.

## Revendications

1. Procédé de séparation du gaz résiduaire d'une unité de production de métal ferreux dans lequel :
i) Le gaz résiduaire (1) contient au moins du CO, du CO2, de l'hydrogène et de l'azote et est comprimé dans un premier compresseur (C) et ensuite séparé par adsorption à bascule de pression dans une première unité d'adsorption (4) pour produire un gaz (5) appauvri en monoxyde de carbone et en hydrogène et enrichi en CO2 par rapport au gaz résiduaire et un premier gaz (7) enrichi en monoxyde de carbone et en hydrogène et appauvri en CO2 par rapport au gaz résiduaire, le premier gaz contenant au plus 2% mol CO2
ii) Le gaz enrichi en CO2 est envoyé à une unité (CC) de séparation par condensation partielle et/ou distillation et/ou solidification qui produit un fluide (14) riche en CO2 contenant au moins 80% mol de CO2, voire au moins 95% mol de CO2
iii) Au moins une partie du gaz enrichi en CO est séparée par adsorption à bascule de température dans une deuxième unité d'adsorption (6) pour former un gaz (23) enrichi en CO2 par rapport au premier gaz enrichi en CO à une première pression et un deuxième gaz (15) enrichi en CO et en hydrogène par rapport au premier gaz enrichi en CO, le deuxième gaz contenant de l'azote et
iv) Au moins une partie du deuxième gaz (15) enrichi en CO et en hydrogène est comprimée (C2) et séparée (CB) par condensation partielle et/ou lavage et/ou distillation pour produire un troisième fluide (19) enrichi en azote et appauvri en hydrogène et en CO par rapport au deuxième gaz et un quatrième gaz (17) appauvri en azote et enrichi en CO et/ou en hydrogène par rapport au deuxième gaz.

2. Procédé selon la revendication 1 dans lequel au moins une partie du deuxième et/ou quatrième gaz (15, 17) enrichi en CO est envoyée à un procédé de production de biocarburant, par exemple d'éthanol, par fermentation.

3. Procédé selon la revendication 1 ou 2 dans lequel au moins une partie du deuxième et/ou quatrième gaz est séparée par condensation partielle et/ou lavage et/ou distillation pour produire le quatrième gaz (17) enrichi en CO et appauvri en hydrogène et en azote par rapport au deuxième gaz et un cinquième gaz appauvri en azote et en CO et enrichi en hydrogène par rapport au deuxième gaz.

4. Procédé selon la revendication 3 dans lequel au moins une partie du quatrième gaz (17) et/ou du cinquième gaz est envoyée à un/au procédé de production de biocarburant, par exemple d'éthanol, par fermentation.

5. Procédé selon une des revendications précédentes dans lequel au moins une partie du troisième fluide (19) est envoyée au procédé de production de biocarburant, par exemple d'éthanol, par fermentation.

6. Procédé selon une des revendications précédentes dans lequel le gaz (23, 31) enrichi en CO2 produit par adsorption à bascule de température est mélangé avec le gaz enrichi en CO2 (5), éventuellement en amont d'une étape de compression (C1) du gaz (5) enrichi en CO2.

7. Procédé selon une des revendications précédentes dans lequel le premier gaz enrichi en CO (7) est enrichi en azote par rapport au gaz résiduaire (1).

8. Procédé selon une des revendications précédentes dans lequel le deuxième gaz enrichi en CO (15) contient au moins 60% mol de CO.

9. Procédé selon la revendication 8 dans lequel au moins une partie du deuxième gaz (15) est séparée à température cryogénique par condensation partielle et/ou lavage et/ou distillation pour réduire sa teneur en azote formant un gaz contenant au moins 80% mol CO ainsi que de l'hydrogène et un gaz enrichi en azote.

10. Procédé selon une des revendications précédentes dans lequel le gaz résiduaire (1) contient de l'argon et la séparation (CB) par condensation partielle et/ou lavage et/ou distillation produit un fluide enrichi en argon.

11. Procédé selon une des revendications précédentes dans lequel la séparation à température cryogénique produit un fluide contenant au moins 80% d'hydrogène.

12. Procédé selon l'une des revendications précédentes dans lequel le gaz (7) appauvri en CO2 et enrichi en CO contient au moins 85%, de préférence au moins 90% du CO présent dans le gaz résiduaire (1) envoyé à la première unité d'adsorption (4).

13. Procédé selon l'une des revendications précédentes 10 à 13 dans lequel un gaz de régénération envoyé à la deuxième unité d'adsorption (6) est constitué par une partie du deuxième gaz (15) contenant au moins 60% mol CO.

14. Procédé selon l'une des revendications 10 à 13 dans lequel un gaz de régénération envoyé à la deuxième unité d'adsorption (6) est constitué par un gaz produit par la séparation à température cryogénique.

15. Procédé selon l'une des revendications précédentes dans lequel le gaz enrichi en CO2 (5) est séparé dans une unité (CC) de séparation par condensation partielle et/ou distillation et/ou solidification formant au moins un gaz (11, 13) plus riche en CO et hydrogène que le gaz enrichi en CO2 et cet au moins un gaz plus riche en CO et en hydrogène est envoyé être séparé dans la première unité d'adsorption (4).

16. Procédé selon l'une des revendications précédentes dans lequel le gaz enrichi en CO2 (5) contient de l'eau et séché dans une unité de séchage en amont de l'unité (CC) de séparation par condensation partielle et/ou distillation et/ou solidification, un gaz de régénération (11,15, 17, 21,23,31,33) contenant du CO et/ou de l'hydrogène est utilisé pour régénérer l'unité de séchage et ensuite est envoyé être séparé dans la première unité d'adsorption (4).
